# EUROPÄISCHE PATENTSCHRIFT

(11) **EP 3 640 304 B1**
(45) Veröffentlichungstag und Bekanntmachung des Hinweises auf die Patenterteilung: **26.01.2022**
(21) Anmeldenummer: 18201317.7
(22) Anmeldetag: 18.10.2018
(51) Int. Cl.: C09D 5/00

(54) **GRUNDIERUNG FÜR ANSTRICHFARBEN UND PUTZE**
PRIMER FOR PAINTS AND PLASTERS
PEINTURE PRIMAIRE POUR PEINTURE ET ENDUIT

(43) Veröffentlichungstag der Anmeldung: 22.04.2020
(73) Patentinhaber: DAW SE, 64372 Ober-Ramstadt (DE)
(72) Erfinder: Heidrich, Holger, 12627 Berlin (DE); Klaas, Angela, 12524 Berlin (DE)
(74) Vertreter: Metten, Karl-Heinz

(56) Entgegenhaltungen:
- EP-A1- 1 609 379
- EP-A1- 3 385 046
- WO-A1-2005/111100
- WO-A1-2013/050253
- WO-A1-2014/108491
- WO-A1-2018/029051
- WO-A2-2004/046261
- CN-A- 106 118 436

## Beschreibung

Die vorliegende Erfindung betrifft eine Grundierungszusammensetzung für Anstrichfarben und Putze und deren Verwendung sowie eine Grundierung bzw. Grundierungsbeschichtung für Anstrichfarben und Putze. Ferner betrifft die Erfindung ein mit der Grundierungszusammensetzung beschichtetes Substrat, ein Verfahren zur Herstellung eines beschichteten Substrats sowie ein Grundierungszusammensetzungskonzentrat.

Grundierungen sind dem Fachmann in vielfältigen Ausgestaltungen bekannt. In der DE 42 11 248 C2 wird eine Grundierung enthaltend ein wasserlösliches Celluloseetherpulver als Bindemittel, einen Entschäumer und ein zur Anquellverzögerung dienendes Zusatzmittel, z.B. ein homopolymeres Vinylacetat, offenbart. Die DE 37 13 495 A1 macht von einer Grundierung für Anstrichfarben Gebrauch enthaltend 5 bis 20 Gew.-% Wasserglas (Festkörperanteil), 15 bis 40 Gew.-% Polyacrylat (Festkörperanteil), 5 bis 20 Gew.-% amorphen synthetischen Füllstoff sowie übliche Additive. Aus der DE 6 96 22 556 T3 geht eine ein organisches Lösungsmittel enthaltende Grundierungszusammensetzung hervor, die ein Polyacetoacetat mit Acetoacetatgruppen, einen Vernetzer mit wenigstens einer Gruppe, die zur Vernetzung mit Acetoacetatgruppen befähigt ist, und ein Organosilan umfasst, wobei das Organosilan in einer haftungsverstärkenden Menge zugegen zu sein hat.

Grundierungen werden häufig eingesetzt, um eine bessere Haftung des Deckanstrichs an den jeweiligen Untergrund, insbesondere mineralischen Untergrund zu bewirken. Auch dienen Grundierungen zuweilen dazu, einen rauen Untergrund einzuebnen, um nach Applikation eines Farbanstrichs ein glattes Oberflächenerscheinungsbild zu erhalten. Nicht selten sind Grundierungen feinabzustimmen sowohl auf die Beschaffenheit und den Typ des, insbesondere mineralischen, Untergrunds wie auch auf die zu applizierende Anstrichfarbe. Gelingt diese Feinabstimmung nicht, kann ein uneinheitlicher Farbeindruck bzw. eine Fleckigkeit resultieren. Dies tritt beispielsweise häufig dann ein, wenn die wassersaugenden, d.h. hydrophilen Eigenschaften eines mit einem Anstrich zu versehenden Untergrunds mithilfe der verwendeten Grundierungszusammensetzung nicht vereinheitlicht werden können. Grundierungszusammensetzungen, mit denen das Wassersaugverhalten des mit einem Putz oder einem Anstrich zu versehenden Untergrundes günstig beeinflusst werden sollen, um so eine dauerhafte und feste Haftung des Putzmörtels oder der Anstrichfarbe zu erreichen, werden auch als Aufbrennsperre bezeichnet. Um das Problem der nicht einheitlich wassersaugenden bzw. hydrophilen Oberflächen in den Griff zu bekommen, macht man bei den Grundierungen des Stands der Technik häufig von sehr hohen Konzentrationen an Bindemitteln, insbesondere organischen Bindemitteln Gebrauch. Alternativ werden diese Oberflächen sogleich komplett versiegelt. Anstrichsysteme umfassend Grundierungen lassen daher noch stets Wünsche hinsichtlich des angestrebten Eigenschaftsprofils offen.

Die EP 3 385 046 A1 stellt ab auf ein Verfahren zur Herstellung einer dekorativen Holzwerkstoffplatte, wobei das Verfahren die folgenden Schritte umfasst: a) Bereitstellen von Holzpartikeln und/oder -fasern in trockener Form oder in Form einer wässrigen Suspension, b) Bereitstellen mindestens einer trockenen oder flüssigen Beschichtungszusammensetzung, die mindestens ein anorganisches partikuläres Füllmaterial und mindestens ein Bindemittel enthält, c) Bilden einer Holzwerkstoffmatte mit einer ersten Seite und einer Rückseite aus den in Schritt a) bereitgestellten Holzpartikeln und/oder Fasern, d) Vorpressen der Holzwerkstoffmatte aus Schritt c) zu einer vorgepressten Holzwerkstoffmatte, e) Aufbringen mindestens einer Schicht der mindestens einen trockenen oder flüssigen Beschichtungszusammensetzung von Schritt b) auf die erste und/oder die Rückseite der in Schritt d) erhaltenen vorgepressten Holzwerkstoffmatte, f) Heißpressen der in Schritt e) erhaltenen vorgepressten Holzwerkstoffmatte zu einer massiven Holzwerkstoffplatte und g) Aufbringen mindestens einer dekorativen Veredelung auf die erste und/oder die Rückseite der in Schritt f) erhaltenen Holzwerkstoffplatte durch Tintenstrahldrucken, durch Tiefdrucken, durch Aufbringen eines Dekorpapiers, einer Dekorfolie oder einer flüssigen Beschichtung. Durch ein solchen Verfahren sollen die üblichen Oberflächenvorbereitungsschritte nach dem Heißpressen der rohen Holzwerkstoffplatte, z. B. das Schleifen oder Auftragen von Grundierungen, um die Oberfläche für eine anschließende dekorative Veredelung vorzubereiten, entfallen oder sich verringern. Ferner soll mit dem vorgeschlagenen Verfahren ein effizienterer, wirtschaftlicherer und abfallärmerer Produktionsprozess für dekorative Holzwerkstoffplatten ermöglicht werden. Darüber hinaus soll das Aufbringen einer Schicht der Beschichtungszusammensetzung gemäß Schritt e) eine Holzwerkstoffplatte mit verbesserten mechanischen Eigenschaften bereitstellen.

Die WO 2018/029051 A1 stellt ab auf ein Beschichtungssystem zur Wasserableitung, insbesondere zur Flächendrainage, an Bauwerken, aufweisend (a) mindestens eine hydrophile Schicht, wobei die hydrophile Schicht mindestens einen Putz aufweist, und (b) mindestens eine hydrophobe Schicht, wobei die hydrophobe Schicht mindestens einen Putz aufweist, wobei die hydrophile Schicht zwischen dem Bauwerk und der hydrophoben Schicht angeordnet ist. Ein solches Beschichtungssystem soll sich in hervorragender Weise zur Beschichtung von Tunnelwänden und -decken eignen.Die CN 106 118 436 A stellt ab auf eine umweltfreundliche multifunktionale Beschichtung auf Wasserbasis, umfassend eine klare multifunktionale Grundierung auf Wasserbasis, eine farbige multifunktionale Grundierung auf Wasserbasis und eine multifunktionale Deckschicht auf Wasserbasis. Eine solche multifunktionale Beschichtung auf Wasserbasis soll Lacke liefern, die über eine gute Korrosionsbeständigkeit, Witterungsbeständigkeit, UV-Beständigkeit und eine langfristige Erhaltung von Farbe und Glanz verfügen.

Die WO 2014/108491 A1 stellt auf eine wässrige Lackzusammensetzung ab, umfassend ein nicht-filmbildendes Poly(styrolacrylat) mit einer Glasübergangstemperatur (T_{G}) von mindestens 80°C, ein Poly(styrolacrylat)-Harz mit einem gewichtsmittleren Molekulargewicht (Mw) von bis zu 20 000 g/mol sowie Wasser. Eine solche Lackzusammensetzung soll bei der Anwendung auf einem Substrat nach der Trocknung der Lackzusammensetzung einen mikrostrukturierten Lackfilm bereitstellen.

Die WO 2013/050253 A1 stellt auf eine Zusammensetzung für die Beschichtung von einem mindestens teilweise aus mineralischen Materialien bestehenden Untergrund, enthaltend eine mindestens zwei Komponenten aufweisende Formulierung, ab. Eine solche Formulierung zeichnet sich durch eine erste Komponente auf Basis mindestens eines OHfunktionalisierten Bindemittels, wie mindestens ein Polyacrylat mit Styrolgehalt ca. kleiner gleich 30%, und eine zweite Komponente, enthaltend mindestens ein aliphatisches Isocyanat oder ein Polymer davon, und mindestens ein Füllstoff auf organischer Basis wie Polyurethan oder Polymethylmethacrylat, aus. Solche Zusammensetzungen sollen block- und kratzfest sowie antigraffiti-tauglich sein und ferner, alle Anforderungen einer wetterbeständigen Beschichtung für mineralische Untergründe, wie insbesondere Faserzementplatten, erfüllen.

Die EP 1 609 379 A1 stellt auf eine Bekleidung für Motorradfahrer oder textile Zusatzartikel für Motorradfahrer ab, wobei die Oberfläche teilweise den "Lotus"-Effekt aufweist. Solche Bekleidungsstücke sollen gute Reinigungseigenschaften aufweisen und es ermöglichen, dass die Bekleidung und die Zusatzausstattung für Motorradfahrer auch in hellen Farben ausgeführt werden können.

Die WO 2005/111100 A1 stellt auf eine filmbildende Zusammensetzung ab, wobei die Zusammensetzung eine wässrige Dispersion von polymeren Mikroteilchen umfasst, die durch Emulsionspolymerisation einer monomeren Zusammensetzung hergestellt wird. Die wässrige Dispersion von polymeren Mikroteilchen umfasst (1) mindestens 10 Gewichtsprozent einer oder mehrerer vinylaromatischer Verbindungen; (2) 0,1 bis 10 Gewichtsprozent eines oder mehrerer carbonsäurefunktioneller polymerisierbarer, ethylenisch ungesättigter Monomere; (3) o bis 10 Gewichtsprozent eines oder mehrerer polymerisierbarer Monomere mit einer oder mehreren funktionellen Gruppen, die in der Lage sind, unter Bildung von Vernetzungen zu reagieren; und (4) ein oder mehrere polymerisierbare, ethylenisch ungesättigte Monomere, wobei die Gewichtsprozente auf das Gesamtgewicht der in der Monomerzusammensetzung vorhandenen Monomere bezogen sind; wobei (1), (2), (3) und (4) jeweils voneinander verschieden sind; und wobei mindestens eines von (3) und (4) in der Monomerzusammensetzung vorhanden ist. Solche filmbildenden Zusammensetzungen sollen im Wesentlichen frei von organischen Lösemitteln und besonders in der Automobilindustrie nützlich sein.

Die WO 2004/046261 A2 stellt ab auf ein Verfahren zur Herstellung einer Wasser-in-Wasser-Mehrfarbenfarbe, das die folgenden Schritte umfasst: (A) Bereitstellen einer ersten Zusammensetzung, (B) Bereitstellen einer zweiten Zusammensetzung, (C) Bereitstellen einer dritten Zusammensetzung, (D) Bereitstellen einer vierten Zusammensetzung, (E) Mischen der ersten Zusammensetzung mit einer Zusammensetzung, ausgewählt aus der Gruppe, bestehend aus: (a) der zweiten Zusammensetzung im Gewichtsverhältnisbereich von etwa 85:15 bis etwa 80:20 der ersten Zusammensetzung zu der zweiten Zusammensetzung; (b) der dritten Zusammensetzung im Gewichtsverhältnisbereich von etwa 85:15 bis etwa 80:20 der ersten Zusammensetzung zu der dritten Zusammensetzung, und (c) einer Kombination der zweiten Zusammensetzung und der dritten Zusammensetzung im Gewichtsverhältnisbereich von etwa 70:15:15 bis etwa 80:10:10 der ersten Zusammensetzung zu der zweiten Zusammensetzung zu der dritten Zusammensetzung, so dass eine erste Dispersphasen-Gelzusammensetzung mit einer Viskosität im Bereich von etwa 25.000 bis etwa 85.000 Centipoise, gemessen mit einem Brookfield-Viskosimeter, das bei 20 U/min bei 25 °C mit einer No. 4-Spindel arbeitet; und (F) Mischen der ersten Dispersphasen-Gelzusammensetzung mit der vierten Zusammensetzung, wobei das Mischen in Gegenwart eines hydrophoben Polyisocyanats durchgeführt wird, wobei die Gesamtmenge des vorhandenen hydrophoben Polyisocyanats, bezogen auf 100 Gew.-% der Gesamtmenge aller während des Mischens vorhandenen Komponenten, im Bereich von mehr als o bis etwa 40 Gew.-% liegt, wobei die jeweiligen Mengen der ersten Dispersphasen-Gelzusammensetzung und der vierten Zusammensetzung so sind, dass das Verhältnis der Viskosität der vierten Zusammensetzung zu der Viskosität der ersten Dispersphasen-Zusammensetzung im Bereich von etwa 1:5 bis etwa 1:10 liegt, wobei die beim Mischen verwendete Mischscherkraft ausreicht, um (a) die erste Dispersphasen-Gelzusammensetzung in diskrete Gelkörper aufzubrechen, die in der vierten Zusammensetzung dispergiert sind, und (b) das hydrophobe Polyisocyanat zu dispergieren, wobei die Mischscherkraft umgekehrt proportional zur durchschnittlichen Größe der so gebildeten Dispersphasen-Körper ist, um dadurch die mehrfarbige Farbe herzustellen. Die erste Zusammensetzung umfasst dabei bezogen auf 100 Gew.-% der ersten Zusammensetzung: (a) etwa 10 bis etwa 40 Gew.-% eines inerten filmbildenden, wasserdispergierten, vernetzbaren carboxylierten Polymersystems; (b) von und einschließlich o bis etwa 10 Gew.-% eines Vernetzungsmaterials, ausgewählt aus der Gruppe bestehend aus reaktiven Härtungsmitteln und organischen Vernetzungsmitteln; (c) von etwa 0,5 bis etwa 2 Gew.-% eines gelösten Cellulosematerials, ausgewählt aus der Gruppe bestehend aus Hydroxy(niederalkyl)cellulose und Alkalimetall-earboxylierter (niederalkyl)cellulose; (d) von und einschließlich 0 bis etwa 35 Gew.-% eines hydrophoben Polyisocyanats; (e) von und einschließlich 0 bis etwa 10 Gew.-% filmbildenden, in Wasser dispergierten, vernetzbaren, auf Druck ansprechenden Klebstoff; (f) von und einschließlich 0 bis etwa 10 Gew.-% Polyol auf Wasserbasis; (g) von und einschließlich o bis etwa 40 Gew.-% dispergiertes Pigment; (h) von und einschließlich o bis etwa 15 Gew.-% organisches Co-Lösungsmittel; (i) von und einschließlich 0 bis etwa 30 Gew.-% einer mit Wasser nicht mischbaren organischen Flüssigkeit, die ein Lösungsmittel für das hydrophobe Polyisocyanat ist; und (j) etwa 20 bis etwa 80 Gew.-% Wasser; wobei das Verhältnis zwischen den Komponenten der ersten Zusammensetzung so ist, dass die erste Zusammensetzung eine Viskosität im Bereich von etwa 10.000 bis 30.000 Centipoise aufweist, gemessen mit einem Brookfield-Viskosimeter, das bei 20 U/min bei 25 °C mit einer Spindel Nr. 4 arbeitet. Die zweite Zusammensetzung umfasst dabei auf Basis von 100 Gew.-% der zweiten Zusammensetzung: (a) etwa 0,5 bis etwa 5 Gew.-% gelösten kationischen quaternisierten Celluloseether; und (b) etwa 55 bis etwa 99,5 Gew.-% Wasser. Die dritte Zusammensetzung umfasst dabei auf einer Basis von 100 Gew.-% der dritten Zusammensetzung: (a) etwa 5 bis etwa 10 Gew.-% dispergierten, in Wasser quellbaren Ton; (b) etwa 0,5 bis etwa 2 Gew.-% gelöstes Peptisierungsmittel; und (c) etwa 88 bis etwa 95 Gew.-% Wasser. Die vierte Zusammensetzung umfasst dabei auf Basis von 100 Gew.-% der vierten Zusammensetzung: (a) etwa 0,5 bis etwa 40 Gew.-% des inerten filmbildenden, wasserdispergierten, vernetzbaren Polymersystems; (b) von und einschließlich o bis etwa 5 Gew.-% des vernetzenden Materials; (e) von und einschließlich o bis etwa 25 Gew.-% des hydrophoben Polyisocyanats; (d) von und einschließlich o bis etwa 30 Gew.-% des druckempfindlichen Klebstoffs; (e) von und einschließlich o bis etwa 40 Gew.-% des Polyols auf Wasserbasis; (f) etwa 1,5 bis etwa 5 Gew.-% eines in Wasser dispergierten, in Wasser quellbaren Tons, (g) etwa 0,1 bis etwa 0,8 Gew.-% eines gelösten Peptisiermittels, (h) von und einschließlich o bis etwa 30 Gew.-% eines Pigments, (i) von und einschließlich o bis etwa 0,25 Gew.-% eines Antischaummittels, (j) von und einschließlich o bis etwa 0,25 Gew.-% eines Netzmittels, (k) von und einschließlich o bis etwa 0.25 Gew.-% organofunktionelles Silan, (1) von und einschließlich o bis etwa 5 Gew.-% kolloidales Siliciumdioxid, (m) von und einschließlich o bis etwa 15 Gew.-% organisches Co-Lösungsmittel, (n) von und einschließlich 0 bis etwa 30 Gew.-% mit Wasser nicht mischbare organische flüssigkeit, die ein Lösungsmittel für das hydrophobe Polyisocyanat ist; (o) etwa 30 bis etwa 70 Gew.-% Wasser, wobei das Verhältnis zwischen den Komponenten der vierten Zusammensetzung so ist, dass die vierte Zusammensetzung eine Viskosität im Bereich von etwa 500 bis etwa 5000 Centipoise aufweist, gemessen mit einem Brookfield-Viskosimeter, das bei 20 U/min bei 25 °C mit einer Spindel Nr. 4 arbeitet. Eine solche mehrfarbige Farbzusammensetzung sollen nach dem Auftragen und Trocknen auf einem Substrat überraschenderweise und unerwartet eine verbesserte Beständigkeit gegen Wasser und organische chemische Lösungsmittel im Vergleich zu einer mehrfarbigen Farbzusammensetzung, die nur carboxyliertes Polymer enthält, aufweisen

Der vorliegenden Erfindung lag daher die Aufgabe zugrunde, Grundierungszusammensetzung bzw. Anstrichsysteme zur Verfügung zu stellen, die nicht mehr mit den Problemen des Stands der Technik behaftet sind und mit denen insbesondere ein sehr gleichförmiger, dauerhafter Farbeindruck und/oder, insbesondere und, mit denen für darauf anzubringende Anstriche und/oder Putze eine gute, dauerhafte Haftung auf dem, insbesondere mineralischen, Untergrund über die gesamte Anstrich- bzw. Putzfläche reproduzierbar erhalten werden kann. Ferner lag der Erfindung insbesondere die Aufgabe zugrunde, Anstrichsysteme zur Verfügung zu stellen, bei denen die Anstrichfarbe oder der Putzmörtel über eine gute Haftung an den Untergrund verfügt.

Demzufolge wurde eine Grundierungszusammensetzung gefunden, enthaltend a) mindestens ein in Wasser dispergiertes oder dispergierbares organisches Bindemittel, wobei das Bindemittel in einer Menge, bezogen auf das Gesamtgewicht der Zusammensetzung, nicht oberhalb von 7,0 Gew.-% (Feststoffanteil) vorliegt,
b) mindestens ein Hydrophobierungsmittel, wobei das Hydrophobierungsmittel in einer Menge, bezogen auf das Gesamtgewicht der Zusammensetzung, nicht oberhalb von 1,75 Gewichtsprozent (Fest- bzw. Wirkstoffanteil) vorliegt, und
c) mindestens 90,25 Gewichtsprozent oder mindestens 91,25 Gew.-% Wasser, und
d) gegebenenfalls mindestens ein Topfkonservierungsmittel, bevorzugt in einer Menge von maximal 1,0 Gewichtsprozent, wobei die die Grundierungszusammensetzung bildenden Komponenten stets 100,0 Gew.-% ergeben.

Dabei kann in einer besonders bevorzugten Ausgestaltung vorgesehen sein, dass die erfindungsgemäße Grundierungszusammensetzung aus
a) dem mindestens einen in Wasser dispergierten organischen Bindemittel in einer Menge, bezogen auf das Gesamtgewicht der Zusammensetzung, nicht oberhalb von 7,0 Gew.-% (Feststoffanteil), und
b) dem mindestens einen Hydrophobierungsmittel in einer Menge, bezogen auf das Gesamtgewicht der Zusammensetzung, nicht oberhalb von 1,75 Gewichtsprozent (Fest- bzw. Wirkstoffanteil), und
c) Wasser in einer Menge von mindestens 90,25 Gewichtsprozent oder mindestens 91,25 Gew.-%, und
d) gegebenenfalls mindestens einem Topfkonservierungsmittel in einer Menge von maximal 1,0 Gewichtsprozent, besteht, wobei die die Grundierungszusammensetzung bildenden Komponenten stets 100,0 Gew.-% ergeben.

Wie sich überraschend gezeigt hat, lassen sich mit den erfindungsgemäßen Grundierungszusammensetzungen insbesondere auch dadurch eine hinreichende Haftung und/oder, insbesondere und, ein gleichmäßiger Farbauftrag erhalten, dass diese 0,1 bis 1,75 Gewichtsprozent, bevorzugt 0,2 bis 1,5 Gewichtsprozent und besonders bevorzugt 0,25 bis 1,25 Gewichtsprozent an dem mindestens einen Hydrophobierungsmittel (jeweils Fest- bzw. Wirkstoffanteil) aufweist. In dieser Ausführungsvariante zeichnet sich die erfindungsgemäße Grundierungszusammensetzung durch eine geringe Konzentration an Hydrophobierungsmittel aus.

Für die erfindungsgemäßen Grundierungszusammensetzungen besonders geeignete Hydrophobierungsmittel basieren auf wässrigen Hydrophobierungsmitteldispersionen, insbesondere Wachsdispersionen. Zweckmäßigerweise können diese Hydrophobierungsmittel auch in Form einer wässrigen Hydrophobierungsmitteldispersion, insbesondere Wachsdispersion, bei der Bildung der Grundierungszusammensetzung zugesetzt werden. Besonders bevorzugte Hydrophobierungsmittel können dabei ausgewählt werden aus der Gruppe bestehend aus Polyethylen-, insbesondere HD-Polyethylen-, Paraffin-, Montan-, Carnauba- und Amidwachsen sowie deren Mischungen. Besonders bevorzugt sind Paraffinwachse. Die vorangehend genannten Wachse, insbesondere Paraffinwachse, werden bei der Herstellung der erfindungsgemäßen Grundierungszusammensetzung vorzugsweise in Form einer wässrigen Wachsdispersion zugegeben.

Die erfindungsgemäße Grundierungszusammensetzung verfügt in einer bevorzugten Ausführungsvariante über 0,25 bis 7,0 Gewichtsprozent, bevorzugt 0,5 bis 6,0 Gewichtsprozent, ferner bevorzugt 0,5 bis 6,0 Gewichtsprozent, besonders bevorzugt 1,0 bis 5,0 Gewichtsprozent und insbesondere 1,0 bis 4,75 Gewichtsprozent an dem mindestens einen organischen Bindemittel (jeweils Feststoffanteil). Besonders bevorzugte organische Bindemittel können dabei ausgewählt werden aus der Gruppe bestehend aus Acrylat-, Styrol-, insbesondere Styrolacrylat-, Vinylacetat-, insbesondere Ethylenvinylacetat-, Vinylpropionat- und/oder Polyurethanhomo- und/oder -copolymeren. Die organischen Bindemittel werden regelmäßig in Form einer wässrigen Dispersion eingesetzt. Besonders geeignete organische Bindemittel liegen in Form sphärischer Kunststoffpartikel mit einem durchschnittlichen Durchmesser kleiner 2 µm vor.

Die erfindungsgemäßen Grundierungszusammensetzungen sind vorzugsweise mit einem Topfkonservierungsmittel ausgestattet. Dieses liegt in diesen Zusammensetzungen in zweckmäßigen Ausgestaltungen in Mengen von nicht mehr als 1,0 Gewichtsprozent, vorzugsweise nicht mehr als 0,5 Gewichtsprozent und besonders bevorzugt im Bereich von 0,01 bis 0,25 Gewichtsprozent (Fest- bzw. Wirkstoffanteil) vor.

In einer besonders bevorzugten Ausführungsform kann vorgesehen sein, dass die erfindungsgemäßen Grundierungszusammensetzungen 0,25 bis 7,0 Gewichtsprozent, bevorzugt 0,5 bis 6,0 Gewichtsprozent und besonders bevorzugt 1,0 bis 5,0 Gewichtsprozent an dem mindestens einen organischen Bindemittel (jeweils Feststoffanteil) und 0,1 bis 1,75 Gewichtsprozent, bevorzugt 0,2 bis 1,5 Gewichtsprozent und besonders bevorzugt 0,25 bis 1,25 Gewichtsprozent an dem mindestens einen Hydrophobierungsmittel (jeweils Fest- bzw. Wirkstoffanteil), und mindestens 92,0 Gewichtsprozent und besonders bevorzugt im Bereich von 93,5 bis 98,75 Gewichtsprozent oder 93,5 bis 98,5 Gewichtsprozent an Wasser und gegebenenfalls nicht mehr als 1,0 Gewichtsprozent, vorzugsweise nicht mehr als 0,5 Gewichtsprozent und besonders bevorzugt im Bereich von 0,01 bis 0,25 Gewichtsprozent an dem mindestens einen Topfkonservierungsmittel (Fest- bzw. Wirkstoffanteil), aufweisen, wobei die die Grundierungszusammensetzung bildenden Komponenten stets 100,0 Gew.-% ergeben.

Als überraschend hat sich herausgestellt, dass sich mit den erfindungsgemäßen Grundierungszusammensetzungen die hier beschriebenen Vorteile einstellen, obwohl die einzelnen Bestandteile, insbesondere das bzw. die organischen Bindemittel, hierin in sehr verdünnter Form, d.h. in relativ geringer Konzentration vorliegen. Demgemäß beträgt der Wasseranteil in besonders geeigneten erfindungsgemäßen Grundierungszusammenzungen vorzugsweise mindestens 92,0 Gewichtsprozent und liegt insbesondere im Bereich von 93,5 bis 98,75 Gewichtsprozent oder 93,5 bis 98,5 Gewichtsprozent.

Für vielfältige Anwendungen hat es sich als hinreichend erwiesen, dass die erfindungsgemäße Grundierungszusammensetzung einen pH-Wert nicht unterhalb von 7,0, bevorzugt im Bereich von 7,0 bis 9,0 und besonders bevorzugt im Bereich von 7,5 bis 8,5, aufweist oder auf einen pH-Wert nicht unterhalb von 7,0, bevorzugt im Bereich von 7,0 bis 9,0 und besonders bevorzugt im Bereich von 7,5 bis 8,5 eingestellt worden ist, beispielsweise unter Verwendung geeigneter Basen, wie Kalium- oder Natriumhydroxid.

In den erfindungsgemäßen Grundierungszusammensetzungen können auch Methanol, Ethanol und/oder i- und/oder n-Propanol zum Einsatz kommen, wobei Ethanol bevorzugt ist. Auf den Einsatz der vorangehend genannten Alkohole, insbesondere Ethanol, greift man auch dann zurück, wenn die mit der Grundierungszusammensetzung zu versehenden Untergründe nicht oder noch nicht vollständig trocken sind. Bevorzugt kommen Methanol, Ethanol und/oder i- und/oder n-Propanol, insbesondere Ethanol, dabei in einer Menge im Bereich von 0,01 bis 20 Gew.-%, besonders bevorzugt im Bereich von 6 bis 10 Gew.-% zum Einsatz.

Die erfindungsgemäße Grundierungszusammensetzung kann ferner auch Filmkonservierungsmittel, Verdicker, Wasserglas, Kieselsol, Füllstoffe, mineralische Pigmente, organische Pigmente, Farbstoffe und/oder Entschäumer enthalten.

Besonders geeignete Verdicker können dabei ausgewählt werden aus der Gruppe bestehend aus Polyacrylat-Verdickern, insbesondere HASE-Polyacrylat-Verdickern, Polyurethan-Verdickern, modifizierten Polyharnstoff-Verdickern, Polysaccharid-Verdickern, beispielsweise Cellulose-Verdickern, insbesondere auf Basis von Hydroxyethylcellulose und/oder Methylcellulose, Polyvinylalkohol-Verdickern, Polyetherpolyol-Verdickern und modifizierten Schichtsilikaten, insbesondere organisch modifizierten Schichtsilikaten, und beliebigen Mischungen hiervon.

In einer besonders zweckmäßigen Ausführungsform ist die erfindungsgemäße Grundierungszusammensetzung hingegen im Wesentlichen frei von Füllstoffen, Wasserglas, Kieselsol, mineralischen Pigmenten, organischen Pigmenten, Farbstoffen, Verdickern und/oder Entschäumern und vorzugsweise frei von Füllstoffen, Wasserglas, Kieselsol, mineralischen Pigmenten, organischen Pigmenten, Farbstoffen, Verdickern und Entschäumern. Auf diese Weise gelingt es vielfach, zu besonders ebenen bzw. glatten Anstrichoberflächen zu gelangen.

Die erfindungsgemäßen Grundierungszusammensetzungen eignen sich insbesondere auch für die Herstellung einer Aufbrennsperre auf einem Substratuntergrund, insbesondere auf einem mineralischen Substratuntergrund oder auf einem Farbanstrich, vorzugsweise Dispersionsfarbanstrich.

Die erfindungsgemäßen Grundierungszusammensetzungen lassen sich demgemäß auf vielfältige Substratuntergründe anbringen. Exemplarisch seien Putzbeschichtungen, insbesondere Kalk/Putzbeschichtungen, ungebrannte Mauersteine, Porenbetonsubstrate, Gipsplatten, Gipskartonplatten, Betonsubstrate, Farbanstriche, insbesondere Dispersionsfarbanstrichen, Kalksandsteinsubstraten und Holz genannt.

Die erfindungsgemäßen Grundierungszusammensetzungen eignen sich insbesondere auch für die Vergleichmäßigung von ungleichmäßig saugenden, insbesondere mineralischen oder Farbanstrich-, Untergründen im Außen- und/oder Innenbereich. Alternativ oder zusätzlich können die erfindungsgemäßen Grundierungszusammensetzungen auch eingesetzt werden für die Vergleichmäßigung der Kapillarleitfähigkeit von, insbesondere mineralischen oder Farbanstrich-, Untergründen im Außen- und/oder Innenbereich mit variierenden kapillarleitfähigen Eigenschaften. Ferner können die erfindungsgemäßen Grundierungszusammensetzungen alternativ oder zusätzlich eingesetzt werden für die Verfestigung von und/oder Haftungsverbesserung auf, insbesondere mineralischen oder Farbanstrich-, Untergründen im Außen- und/oder Innenbereich. Außerdem eignen sich die erfindungsgemäßen Grundierungszusammensetzungen für die Gewährleistung eines einheitlichen Farbeindrucks von Farbanstrichen auf, insbesondere mineralischen oder Farbanstrich-, Untergründen im Außen- und/oder Innenbereich. Hierbei können die mineralischen Untergründe insbesondere ausgewählt sein aus der Gruppe bestehend aus Putzbeschichtungen, Gipsplatten, Gipskartonplatten, ungebrannten Mauersteinen, Porenbetonsubstraten, Betonsubstraten und Kalksandsteinsubstraten. Die Farbanstrichuntergründe sind vorzugsweise ausgewählt aus Silikatfarb-, Dispersionsfarb- und Dispersionssilikatfarbbeschichtungen, vorzugsweise Dispersionsfarbbeschichtungen.

Die der Erfindung zugrunde liegende Aufgabe wird des Weiteren gelöst durch eine Grundierungsbeschichtung auf einer beschichtbaren Oberfläche eines Substrats, insbesondere mineralischen Substrats, erhalten oder erhältlich mit den erfindungsgemäßen Grundierungszusammensetzungen. Die erfindungsgemäße Grundierungszusammensetzung zeichnet sich durch einen geringen Flächenverbrauch aus. Beispielsweise können zufriedenstellende erfindungsgemäße Grundierungsbeschichtungen erhalten werden durch Auftrag von 50 bis 200 g/m², bevorzugt 60 bis 180 g/m² und besonders bevorzugt 80 bis 140 g/m² an der erfindungsgemäßen Grundierungszusammensetzung auf die beschichtbare Oberfläche. Die erfindungsgemäßen Grundierungszusammensetzungen erlauben somit einen sehr geringen Flächenverbrauch.

Außerdem wird die der Erfindung zugrunde liegende Aufgabe gelöst durch ein beschichtetes Substrat, insbesondere beschichtetes mineralisches Substrat, enthaltend eine beschichtbare Fläche auf einem Substratuntergrund und darauf angebracht mindestens eine, insbesondere genau eine, erfindungsgemäße Grundierungsbeschichtung. Dieses beschichtete Substrat enthält vorzugsweise, angebracht auf der Grundierungsbeschichtung, mindestens eine Farbbeschichtung bzw. einen Farbanstrich. Hierbei können geeignete Substratuntergründe ausgewählt sein aus der Gruppe bestehend aus Putzbeschichtungen, insbesondere Kalk/Zement-Putzen, ungebrannten Mauersteinen, Porenbetonsubstraten, Gipsplatten, Gipskartonplatten, Betonsubstraten, Farbanstrichen, insbesondere Dispersionsfarbanstrichen, Kalksandsteinsubstraten und Holz. Bei der auf der erfindungsgemäßen Grundierungsbeschichtung aufgebrachten Farbbeschichtung kann es sich insbesondere um Silikatfarb-, Dispersionsfarb- und Dispersionssilikatfarbbeschichtungen handeln.

Außerdem wird die der Erfindung zugrunde liegende Aufgabe gelöst durch ein Verfahren zur Herstellung eines erfindungsgemäßen Substrats, umfassend die Schritte:
i) Zurverfügungstellung eines Substrats mit einer beschichtbaren Oberfläche,
ii) Aufbringen der erfindungsgemäßen Grundierungszusammensetzung auf die beschichtbare Oberfläche des Substrats,
iii) Trocknen der Grundierungszusammensetzung unter Ausbildung einer erfindungsgemäßen Grundierungsbeschichtung und
iv) gegebenenfalls Aufbringen einer Farbbeschichtung und/oder Aufbringen einer Putzbeschichtung, insbesondere einer Farbbeschichtung, auf die Grundierungsbeschichtung.

Bei dem erfindungsgemäßen Verfahren wird vorzugsweise auf Substrate zurückgegriffen, ausgewählt aus der Gruppe bestehend aus Putzbeschichtungen, insbesondere Kalk/Zement-Putzen, ungebrannten Mauersteinen, Porenbetonsubstraten, Gipsplatten, Gipskartonplatten, Betonsubstraten, Farbanstrichen, insbesondere Dispersionsfarbanstrichen, Kalksandsteinsubstraten und Holz.

Wird bei dem erfindungsgemäßen Verfahren ein Substrat eingesetzt, umfassend eine beschichtbare Holzoberfläche, greift man vorzugsweise auf eine erfindungsgemäße Grundierungszusammensetzung zurück, enthaltend Methanol, Ethanol und/oder i- und/oder n-Propanol, insbesondere Ethanol. Hierbei kommen die vorangehend genannten Alkohole, insbesondere Ethanol, bevorzugt in einer Menge im Bereich von 0,01 bis 20 Gew.-%, besonders bevorzugt im Bereich von 6 bis 10 Gew.-% zum Einsatz. Die erfindungsgemäßen Grundierungszusammensetzungen können hierbei in einer weiteren bevorzugten Ausgestaltung auch mindestens ein UV-Schutzmittel, vorzugsweise in einer Menge im Bereich von 0,01 bis 5 Gew.-%, besonders bevorzugt im Bereich von 0,1 bis 1,25 Gew.-%, (jeweils bezogen auf den Fest- bzw. Wirkstoffgehalt) enthalten.

Schließlich wird die der vorliegenden Erfindung zugrunde liegende Aufgabe auch durch ein Grundierungszusammensetzungskonzentrat für eine erfindungsgemäße Grundierungszusammensetzung gelöst, enthaltend
a) mindestens ein in Wasser dispergiertes oder dispergierbares organisches Bindemittel, wobei das Bindemittel in einer Menge, bezogen auf das Gesamtgewicht der Zusammensetzung, im Bereich von größer 7,0 bis 50 Gew.-%, bevorzugt im Bereich von 10 bis 40 Gew.-%, ferner bevorzugt im Bereich von 12 bis 24 Gew.-% und besonders bevorzugt im Bereich von 15 bis 22 Gew.-%, (jeweils Feststoffanteil) vorliegt, und
b) mindestens ein Hydrophobierungsmittel, wobei das Hydrophobierungsmittel in einer Menge, bezogen auf das Gesamtgewicht der Zusammensetzung, im Bereich von größer 1,75 bis 20 Gew.-%, bevorzugt im Bereich von größer 1,75 bis 10,0 Gew.-%, ferner bevorzugt im Bereich von 2,0 bis 5,0 Gew.-% und besonders bevorzugt im Bereich von 2,0 bis 4,75 Gew.-%, (jeweils Fest- bzw. Wirkstoffanteil) vorliegt, und
c) Wasser, bevorzugt mindestens 30,0 Gewichtsprozent und besonders bevorzugt mindestens 70,0 Gew.-% oder mindestens 71,0 Gew.-% Wasser und
d) gegebenenfalls mindestens ein Topfkonservierungsmittel, bevorzugt in einer Menge von maximal 1,0 Gewichtsprozent, wobei die das Grundierungszusammensetzungskonzentrat bildenden Komponenten stets 100,0 Gew.-% ergeben.

In einer besonders zweckmäßigen Ausgestaltung des vorangehend beschriebenen erfindungsgemäßen Grundierungszusammensetzungskonzentrats liegt das in Wasser dispergierte oder dispergierbare organische Bindemittel in einer Menge, bezogen auf das Gesamtgewicht der Zusammensetzung, im Bereich von 8,0 bis 45 Gew.-%, bevorzugt im Bereich von 9,0 bis 35 Gew.-% und besonders bevorzugt im Bereich von 14 bis 20 Gew.-%, (jeweils Feststoffanteil) vor. Alternativ sowie insbesondere zusätzlich liegt in einer ebenfalls besonders zweckmäßigen Ausgestaltung des vorangehend beschriebenen erfindungsgemäßen Grundierungszusammensetzungskonzentrats das mindestens eine Hydrophobierungsmittel in einer Menge, bezogen auf das Gesamtgewicht der Zusammensetzung, im Bereich von größer 1,75 bis 7,5 Gew.-%, bevorzugt im Bereich von 1,8 bis 7,0 Gew.-% und besonders bevorzugt im Bereich von 1,9 bis 6,0 Gew.-%, (jeweils Fest- bzw. Wirkstoffanteil) vor.

Dabei kann in einer bevorzugten Ausführungsform vorgesehen sein, das erfindungsgemäße Grundierungszusammensetzungskonzentrat aus
a) dem mindestens einen in Wasser dispergierten organischen Bindemittel, insbesondere in einer Menge, bezogen auf das Gesamtgewicht der Zusammensetzung, im Bereich von größer 7,0 bis 50 Gew.-%, bevorzugt im Bereich von 10 bis 40 Gew.-% und besonders bevorzugt im Bereich von 12 bis 24 Gew.-%, (jeweils Feststoffanteil), und
b) mindestens einem Hydrophobierungsmittel, insbesondere in einer Menge, bezogen auf das Gesamtgewicht der Zusammensetzung, im Bereich von größer 1,75 bis 20,0 Gew.-%, bevorzugt im Bereich von größer 1,75 bis 10,0 Gew.-% und besonders bevorzugt im Bereich von 2,0 bis 5,0 Gew.-%, (jeweils Feststoffanteil), und
c) Wasser, bevorzugt in einer Menge von mindestens 30,0 Gewichtsprozent und besonders bevorzugt mindestens 70,0 Gew.-% oder mindestens 71,0 Gew.-%, und
d) gegebenenfalls mindestens einem Topfkonservierungsmittel, bevorzugt in einer Menge von maximal 1,0 Gewichtsprozent, besteht, wobei die das Grundierungszusammensetzungskonzentrat bildenden Komponenten stets 100,0 Gew.-% ergeben.

Die erfindungsgemäße Grundierungszusammensetzung erhält man in einer praktikablen Ausgestaltung durch Verdünnung des Grundierungszusammensetzungskonzentrats mit Wasser in einer in einem Verhältnis im Bereich von 1 zu 2 bis 1 zu 14, bevorzugt in einem Verhältnis im Bereich von 1 zu 3 bis 1 zu 12 und besonders bevorzugt in einem Verhältnis im Bereich von 1 zu 4 bis 1 zu 10. Ein Verdünnungsverhältnis von etwa 1 zu 4 hat sich für viele Anwendungen als zweckmäßig erwiesen.

Der vorliegenden Erfindung liegt die überraschende Erkenntnis zugrunde, dass sich mit den erfindungsgemäßen Grundierungen bei Verwendung geringer Bindemittelkonzentrationen ein mit einem Anstrich versehbarer Untergrund erhalten lässt, der über seine gesamte Fläche noch stets gleichmäßig Wasser aufsaugend bzw. hydrophil ist, und dass sich dies bei gleichzeitigem Einsatz von, insbesondere geringen Mengen an, Hydrophobierungsmittel bewerkstelligen lässt. Es wurde ferner überraschend gefunden, dass sich bei Verwendung der erfindungsgemäßen Grundierungszusammensetzung die Menge an auf der hiermit erhaltenen Grundierung aufzutragenden Anstrichfarbe signifikant verringern lässt, und zwar ohne Einbußen bei der Qualität und Deckkraft des erhaltenen Farbanstrichs in Kauf nehmen zu müssen. Auch wurde überraschend gefunden, dass bei vorheriger Applikation der erfindungsgemäßen Grundierungszusammensetzung die nachfolgende Anstrichfarbe mit geringerem Kraftaufwand und damit auch schneller auftragbar ist. Schließlich zeichnet sich die erfindungsgemäße Grundierungszusammensetzung gegenüber denen des Stands der Technik im Allgemeinen auch durch einen geringen Flächenverbrauch aus, beispielsweise um etwa 5% oder mehr, insbesondere um etwa 10 % oder mehr gegenüber bekannte Grundierungszusammensetzungen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Grundierungszusammensetzung, enthaltend
a) mindestens ein in Wasser dispergiertes oder dispergierbares organisches Bindemittel, wobei das Bindemittel in einer Menge, bezogen auf das Gesamtgewicht der Zusammensetzung, nicht oberhalb von 7,0 Gew.-% (Feststoffanteil) vorliegt,
b) mindestens ein Hydrophobierungsmittel, wobei das Hydrophobierungsmittel in einer Menge, bezogen auf das Gesamtgewicht der Zusammensetzung, nicht oberhalb von 1,75 Gewichtsprozent (Fest- bzw. Wirkstoffanteil) vorliegt, und
c) mindestens 90,25 Gewichtsprozent Wasser sowie
d) gegebenenfalls mindestens ein Topfkonservierungsmittel,
wobei die die Grundierungszusammensetzung bildenden Komponenten stets 100,0 Gew.-% ergeben.

2. Grundierungszusammensetzung nach Anspruch 1, **gekennzeichnet durch** mindestens 91,25 Gew.-% Wasser und/oder
eine Menge von maximal 1,0 Gewichtsprozent an dem mindestens einen Topfkonservierungsmittel.

3. Grundierungszusammensetzung nach Anspruch 1 oder 2, bestehend aus
a) dem mindestens einen in Wasser dispergierten organischen Bindemittel in einer Menge, bezogen auf das Gesamtgewicht der Zusammensetzung, nicht oberhalb von 7,0 Gew.-% (Feststoffanteil),
b) dem mindestens einen Hydrophobierungsmittel in einer Menge, bezogen auf das Gesamtgewicht der Zusammensetzung, nicht oberhalb von 1,75 Gewichtsprozent (Fest- bzw. Wirkstoffanteil), und
c) Wasser in einer Menge von mindestens 90,25 Gewichtsprozent sowie
d) gegebenenfalls dem mindestens einen Topfkonservierungsmittel in einer Menge von maximal 1,0 Gewichtsprozent,
wobei die die Grundierungszusammensetzung bildenden Komponenten stets 100,0 Gew.-% ergeben.

4. Grundierungszusammensetzung nach einem der vorangehenden Ansprüche, **gekennzeichnet durch**
0,25 bis 7,0 Gewichtsprozent, bevorzugt 0,5 bis 6,0 Gewichtsprozent und besonders bevorzugt 1,0 bis 5,0 Gewichtsprozent an dem mindestens einen organischen Bindemittel (jeweils Feststoffanteil) und/oder
0,1 bis 1,75 Gewichtsprozent, bevorzugt 0,2 bis 1,5 Gewichtsprozent und besonders bevorzugt 0,25 bis 1,25 Gewichtsprozent an dem mindestens einen Hydrophobierungsmittel (jeweils Fest- bzw. Wirkstoffanteil)
und/ oder
mindestens 92,0 Gewichtsprozent und bevorzugt im Bereich von 93,5 bis 98,75 Gewichtsprozent oder 93,5 bis 98,5 Gewichtsprozent an Wasser und/oder nicht mehr als 1,0 Gewichtsprozent, vorzugsweise nicht mehr als 0,5 Gewichtsprozent und besonders bevorzugt im Bereich von 0,01 bis 0,25 Gewichtsprozent an dem mindestens einen Topfkonservierungsmittel (Fest- bzw. Wirkstoffanteil),
wobei die die Grundierungszusammensetzung bildenden Komponenten stets 100,0 Gew.-% ergeben.

5. Grundierungszusammensetzung nach einem der vorangehenden Ansprüche, **dadurch gekennzeichnet, dass**
das Hydrophobierungsmittel ausgewählt ist aus der Gruppe bestehend aus Polyethylen-, insbesondere HD-Polyethylen-, Paraffin-, Montan-, Carnauba- und Amidwachsen sowie deren Mischungen und insbesondere Paraffinwachse umfasst.

6. Grundierungszusammensetzung nach einem der vorangehenden Ansprüche, **dadurch gekennzeichnet, dass**
das organische Bindemittel Acrylat-, Styrol-, insbesondere Styrolacrylat-, Vinylacetat-, insbesondere Ethylenvinylacetat-, Vinylpropionat- und/oder Polyurethanhomo- und/oder -copolymere umfasst oder hieraus gebildet ist und insbesondere in Form sphärischer Kunststoffpartikel mit einem durchschnittlichen Durchmesser kleiner 2 µm vorliegt.

7. Grundierungszusammensetzung nach einem der vorangehenden Ansprüche,
**gekennzeichnet durch**
einen pH-Wert nicht unterhalb von 7,0, bevorzugt im Bereich von 7,0 bis 9,0 und besonders bevorzugt im Bereich von 7,5 bis 8,5, oder eingestellt auf einen pH-Wert nicht unterhalb von 7,0, bevorzugt im Bereich von 7,0 bis 9,0 und besonders bevorzugt im Bereich von 7,5 bis 8,5.

8. Grundierungszusammensetzung nach einem der vorangehenden Ansprüche, ferner umfassend
Methanol, Ethanol und/oder Propanol, z.B. i- und/oder n-Propanol, insbesondere Ethanol, vorzugsweise in einer Menge im Bereich von 0,01 bis 20 Gew.-%, besonders bevorzugt im Bereich von 6 bis 10 Gew.-%.

9. Grundierungszusammensetzung nach einem der vorangehenden Ansprüche, ferner umfassend
Filmkonservierungsmittel, Verdicker, Wasserglas, Kieselsol, Füllstoffe, mineralische Pigmente, organische Pigmente, Farbstoffe und/oder Entschäumer.

10. Grundierungszusammensetzung nach einem der vorangehenden Ansprüchen,
**dadurch gekennzeichnet, dass**
diese im Wesentlichen frei ist von Füllstoffen, Wasserglas, Kieselsol, mineralischen Pigmenten, organischen Pigmenten, Farbstoffen, Verdickern und Entschäumern.

11. Verwendung der Grundierungszusammensetzung gemäß einem der vorangehenden Ansprüche für die Herstellung einer Aufbrennsperre auf einem Substratuntergrund, bevorzugt ausgewählt aus der Gruppe bestehend aus Putzbeschichtungen, insbesondere Kalk/Zement-Putzen, ungebrannten Mauersteinen, Porenbetonsubstraten, Gipsplatten, Gipskartonplatten, Betonsubstraten, Farbanstrichen, insbesondere Dispersionsfarbanstrichen, Kalksandsteinsubstraten und Holz, besonders bevorzugt auf einem mineralischen Substratuntergrund oder auf einem Farbanstrich, bevorzugt ausgewählt aus der Gruppe bestehend aus Silikatfarb-, Dispersionsfarb- und Dispersionssilikatfarbbeschichtungen, besonders bevorzugt Dispersionsfarbbeschichtungen.

12. Verwendung der Grundierungszusammensetzung nach einem der Ansprüche 1 bis 10 für die Vergleichmäßigung von ungleichmäßig saugenden, insbesondere mineralischen oder Farbanstrich-, Untergründen im Außen- und/oder Innenbereich und/oder für die Vergleichmäßigung der Kapillarleitfähigkeit von, insbesondere mineralischen oder Farbanstrich-, Untergründen im Außen- und/oder Innenbereich mit variierenden kapillarleitfähigen Eigenschaften und/oder für die Verfestigung von und/oder Haftungsverbesserung auf, insbesondere mineralischen oder Farbanstrich-, Untergründen im Außen- und/oder Innenbereich und/oder für die Gewährleistung eines einheitlichen Farbeindrucks von Farbanstrichen auf, insbesondere mineralischen oder Farbanstrich-, Untergründen im Außen- und/oder Innenbereich, wobei die mineralischen Untergründe insbesondere ausgewählt sind aus der Gruppe bestehend aus Putzbeschichtungen, Gipsplatten, Gipskartonplatten, ungebrannten Mauersteinen, Porenbetonsubstraten, Betonsubstraten und Kalksandsteinsubstraten und wobei die Farbanstrichuntergründe ausgewählt sind aus Silikatfarb-, Dispersionsfarb- und Dispersionssilikatfarbbeschichtungen, vorzugsweise Dispersionsfarbbeschichtungen.

13. Grundierungsbeschichtung auf einer beschichtbaren Oberfläche eines Substrats, insbesondere mineralischen Substrats, erhalten oder erhältlich mit der Grundierungszusammensetzung gemäß einem der Ansprüche 1 bis 10, insbesondere durch Auftrag von 50 bis 200 g/m², bevorzugt 60 bis 180 g/m² und besonders bevorzugt 80 bis 140 g/m², an der Grundierungszusammensetzung auf die beschichtbare Oberfläche.

14. Beschichtetes Substrat, insbesondere beschichtetes mineralisches Substrat, enthaltend eine beschichtbare Fläche auf einem Substratuntergrund, insbesondere ausgewählt ist aus der Gruppe bestehend aus Putzbeschichtungen, insbesondere Kalk/Zement-Putzen, ungebrannten Mauersteinen, Porenbetonsubstraten, Gipsplatten, Gipskartonplatten, Betonsubstraten, Farbanstrichen, insbesondere Dispersionsfarbanstrichen, Kalksandsteinsubstraten und Holz, und darauf angebracht mindestens eine, insbesondere genau eine, Grundierungsbeschichtung nach Anspruch 13.

15. Beschichtetes Substrat nach Anspruch 14, ferner umfassend,
auf der Grundierungsbeschichtung angebracht, mindestens eine Farbbeschichtung, insbesondere ausgewählt ist aus der Gruppe bestehend aus Silikatfarb-, Dispersionsfarb- und Dispersionssilikatfarbbeschichtungen.

16. Verfahren zur Herstellung eines beschichteten Substrats nach Anspruch 14 oder 15, umfassend die Schritte:
i) Zurverfügungstellung eines Substrats mit einer beschichtbaren Oberfläche,
ii) Aufbringen der Grundierungszusammensetzung nach einem der Ansprüche 1 bis 10 auf die beschichtbare Oberfläche des Substrats,
iii) Trocknen der Grundierungszusammensetzung unter Ausbildung einer Grundierungsbeschichtung nach Anspruch 13 und
iv) gegebenenfalls Aufbringen einer Farbbeschichtung und/oder einer Putzbeschichtung auf die Grundierungsbeschichtung.

17. Verfahren nach Anspruch 16, **dadurch gekennzeichnet, dass** das Substrat eine beschichtbare Holzoberfläche umfasst oder darstellt und dass die Grundierungszusammensetzung Methanol, Ethanol und/oder Propanol, z.B. i- und/oder n-Propanol, insbesondere Ethanol, bevorzugt in einer Menge im Bereich von 0,01 bis 20 Gew.-%, besonders bevorzugt im Bereich von 6 bis 10 Gew.-%, und/oder mindestens ein UV-Schutzmittel, vorzugsweise in einer Menge im Bereich von 0,01 bis 5 Gew.-%, besonders bevorzugt im Bereich von 0,1 bis 1,25 Gew.-%, (jeweils bezogen auf den Fest- bzw. Wirkstoffgehalt) enthält.

18. Grundierungszusammensetzungskonzentrat für eine Grundierungszusammensetzung nach einem der Ansprüche 1 bis 10, gebildet aus oder enthaltend
a) mindestens ein in Wasser dispergiertes oder dispergierbares organisches Bindemittel, wobei das Bindemittel in einer Menge, bezogen auf das Gesamtgewicht der Zusammensetzung, im Bereich von größer 7,0 bis 50 Gew.-%, bevorzugt im Bereich von 10 bis 40 Gew.-% und besonders bevorzugt im Bereich von 12 bis 24 Gew.-%, (jeweils Feststoffanteil) vorliegt, und
b) mindestens ein Hydrophobierungsmittel, wobei das Hydrophobierungsmittel in einer Menge, bezogen auf das Gesamtgewicht der Zusammensetzung, im Bereich von größer 1,75 bis 20 Gew.-%, bevorzugt im Bereich von größer 1,75 bis 10,0 Gew.-% und besonders bevorzugt 2,0 bis 5,0 Gew.-%, (jeweils Feststoffanteil) vorliegt, und
c) Wasser, bevorzugt mindestens 30,0 Gewichtsprozent und besonders bevorzugt mindestens 70,0 Gew.-% oder mindestens 71,0 Gew.-% Wasser und
d) gegebenenfalls mindestens ein Topfkonservierungsmittel, bevorzugt in einer Menge von maximal 1,0 Gewichtsprozent,
wobei die das Grundierungszusammensetzungskonzentrat bildenden Komponenten stets 100,0 Gew.-% ergeben.

19. Grundierungszusammensetzungskonzentrat nach Anspruch 18, bestehend aus
a) dem mindestens einen in Wasser dispergierten organischen Bindemittel, insbesondere in einer Menge, bezogen auf das Gesamtgewicht der Zusammensetzung, im Bereich von größer 7,0 bis 50 Gew.-%, bevorzugt im Bereich von 10 bis 40 Gew.-% und besonders bevorzugt im Bereich von 12 bis 24 Gew.-%, (jeweils Feststoffanteil), und
b) dem mindestens einen Hydrophobierungsmittel, insbesondere in einer Menge, bezogen auf das Gesamtgewicht der Zusammensetzung, im Bereich von größer 1,75 bis 20,0 Gew.-%, bevorzugt im Bereich von größer 1,75 bis 10,0 Gew.-% und besonders bevorzugt im Bereich von 2,0 bis 5,0 Gew.-%, (jeweils Feststoffanteil), und
c) Wasser, bevorzugt in einer Menge von mindestens 30,0 Gewichtsprozent und besonders bevorzugt mindestens 70,0 Gew.-% oder mindestens 71,0 Gew.-%, und
d) gegebenenfalls dem mindestens einen Topfkonservierungsmittel, bevorzugt in einer Menge von maximal 1,0 Gewichtsprozent,
wobei die das Grundierungszusammensetzungskonzentrat bildenden Komponenten stets 100,0 Gew.-% ergeben.

## Claims

1. A primer composition containing
a) at least one organic binder dispersed or dispersible in water, wherein the binder is present in a quantity, based on the total weight of the composition, of no more than 7.0 wt.% (solids content),
b) at least one hydrophobing agent, wherein the hydrophobing agent is present in a quantity, based on the total weight of the composition, of no more than 1.75 wt.% (solids or active substance content), and
c) at least 90.25 wt.% water and
d) optionally at least one in-can preservative,
wherein the components forming the primer composition always add up to 100.0 wt.%.

2. The primer composition according to Claim 1, **characterized by** at least 91.25 wt.% water and/or
a quantity of at most 1.0 wt.% of the at least one in-can preservative.

3. The primer composition according to Claim 1 or 2, consisting of
a) the at least one binder dispersed in water in a quantity, based on the total weight of the composition, of no more than 7.0 wt.% (solids content),
b) the at least one hydrophobing agent in a quantity, based on the total weight of the composition, of no more than 1.75 wt.% (solids or active substance content), and
c) water in a quantity of at least 90.25 wt.% and
d) optionally the at least one in-can preservative in a quantity of at most 1.0 wt.%, wherein the components forming the primer composition always add up to 100.0 wt.%.

4. The primer composition according to any one of the preceding claims, **characterized by**
0.25 to 7.0 wt.%, preferably 0.5 to 6.0 wt.% and particularly preferably 1.0 to 5.0 wt.% of the at least one organic binder (in each case solids content) and/or
0.1 to 1.75 wt.%, preferably 0.2 to 1.5 wt.% and particularly preferably 0.25 to 1.25 wt.% of the at least one hydrophobing agent (in each case solids or active substance content)
and/or
at least 92.0 wt.% and preferably in the range from 93.5 to 98.75 wt.% or 93.5 to 98.5 wt.% of water and/or
no more than 1.0 wt.%, preferably no more than 0.5 wt.% and particularly preferably in the range from 0.01 to 0.25 wt.% of the at least one in-can preservative (solids or active substance content),
wherein the components forming the primer composition always add up to 100.0 wt.%.

5. The primer composition according to any one of the preceding claims, **characterized in that**
the hydrophobing agent is selected from the group consisting of polyethylene, in particular HD polyethylene, paraffin, montan, carnauba and amide waxes and mixtures thereof and in particular comprises paraffin waxes.

6. The primer composition according to any one of the preceding claims, **characterized in that**
the organic binder comprises or is formed of acrylate, styrene, in particular styrene acrylate, vinyl acetate, in particular ethylene/vinyl acetate, vinyl propionate and/or polyurethane homo- and/or copolymers and is present in particular in the form of spherical plastics particles with an average diameter of less than 2 µm.

7. The primer composition according to any one of the preceding claims, **characterized by**
a pH of no lower than 7.0, preferably in the range from 7.0 to 9.0 and particularly preferably in the range from 7.5 to 8.5, or adjusted to a pH of no lower than 7.0, preferably in the range from 7.0 to 9.0 and particularly preferably in the range from 7.5 to 8.5.

8. The primer composition according to any one of the preceding claims, further comprising
methanol, ethanol and/or propanol, for example i- and/or n-propanol, in particular ethanol, preferably in a quantity in the range from 0.01 to 20 wt.%, particularly preferably in the range from 6 to 10 wt.%.

9. The primer composition according to any one of the preceding claims, further comprising
film preservatives, thickeners, water glass, silica sol, fillers, mineral pigments, organic pigments, dyes and/or defoamers.

10. The primer composition according to any one of the preceding claims, **characterized in that**
it contains substantially no fillers, water glass, silica sol, mineral pigments, organic pigments, dyes, thickeners and defoamers.

11. Use of the primer composition according to any one of the preceding claims for the production of a dehydration barrier on a substrate base, preferably selected from the group consisting of render coatings, in particular lime/cement renders, unfired bricks, lightweight concrete substrates, gypsum board, plasterboard, concrete substrates, paint coatings, in particular dispersion paint coatings, sand-lime brick substrates and wood, particularly preferably on a mineral substrate base or on a paint coating, preferably selected from the group consisting of silicate paint, dispersion paint and silicate dispersion paint coatings, particularly preferably dispersion paint coatings.

12. Use of the primer composition, according to any one of Claims 1 to 10 for equalizing unevenly absorbent, in particular mineral or painted, substrates in outdoor and/or indoor areas and/or for equalizing the capillary conductivity of, in particular mineral or painted, substrates in outdoor and/or indoor areas with differing capillary conductivity properties and/or for consolidating and/or improving adhesion on, in particular mineral or painted, substrates in outdoor and/or indoor areas and/or for ensuring a uniform color appearance of paint coatings on, in particular mineral or painted, substrates in outdoor and/or indoor areas, wherein the mineral substrates are selected in particular from the group consisting of render coatings, gypsum board, plasterboard, unfired bricks, aerated concrete substrates, concrete substrates and sand-lime brick substrates and wherein the painted substrates are selected from silicate paint, dispersion paint and silicate dispersion paint coatings, preferably dispersion paint coatings.

13. A primer coating on a coatable surface of a substrate, in particular mineral substrate, obtained or obtainable with the primer composition according to any one of Claims 1 to 10, in particular by application of 50 to 200 g/m², preferably 60 to 180 g/m² and particularly preferably 80 to 140 g/m², of the primer composition onto the coatable surface.

14. A coated substrate, in particular coated mineral substrate, containing a coatable area on a substrate base, in particular selected from the group consisting of render coatings, in particular lime/cement renders, unfired bricks, lightweight concrete substrates, gypsum board, plasterboard, concrete substrates, paint coatings, in particular dispersion paint coatings, sand-lime brick substrates and wood, and, applied thereto, at least one, in particular precisely one, primer coating according to Claim 13.

15. The coated substrate according to Claim 14, further comprising,
applied to the primer coating, at least one paint coating, in particular selected from the group consisting of silicate paint, dispersion paint and silicate dispersion paint coatings.

16. A method for producing a coated substrate according to Claim 14 or 15 comprising the steps of:
i) providing a substrate with a coatable surface,
ii) applying the primer composition according to any one of Claims 1 to 10 to the coatable surface of the substrate,
iii) drying the primer composition to form a primer coating according to Claim 13 and
iv) optionally applying a paint coating and/or a render coating to the primer coating.

17. The method according to Claim 16, **characterized in that**
the substrate comprises or is a coatable wood surface and **in that** the primer composition contains methanol, ethanol and/or propanol, for example i- and/or n-propanol, in particular ethanol, preferably in a quantity in the range from 0.01 to 20 wt.%, particularly preferably in the range from 6 to 10 wt.%, and/or at least one UV screening agent, preferably in a quantity in the range from 0.01 to 5 wt.%, particularly preferably in the range from 0.1 to 1.25 wt.% (in each case based on the solids or active ingredient content).

18. A primer composition concentrate for a primer composition according to any one of Claims 1 to 10, formed from or containing
a) at least one organic binder dispersed or dispersible in water, wherein the binder is present in a quantity, based on the total weight of the composition, in the range from greater than 7.0 to 50 wt.%, preferably in the range from 10 to 40 wt.% and particularly preferably in the range from 12 to 24 wt.% (in each case solids content), and
b) at least one hydrophobing agent, wherein the hydrophobing agent is present in a quantity, based on the total weight of the composition, in the range from greater than 1.75 to 20 wt.%, preferably in the range from 1.75 to 10.0 wt.% and particularly preferably in the range from 2.0 to 5.0 wt.% (in each case solids content), and
c) water, preferably at least 30.0 wt.% and particularly preferably at least 70.0 wt.% or at least 71.0 wt.% water and
d) optionally at least one in-can preservative, preferably in a quantity of at most 1.0 wt.%,
wherein the components forming the primer composition concentrate always add up to 100.0 wt.%.

19. The primer composition concentrate according to Claim 18, consisting of
a) the at least one organic binder dispersed in water,
in particular in a quantity, based on the total weight of the composition, in the range from greater than 7.0 to 50 wt.%, preferably in the range from 10 to 40 wt.% and particularly preferably in the range from 12 to 24 wt.% (in each case solids content), and
b) the at least one hydrophobing agent, in particular in a quantity, based on the total weight of the composition, in the range from greater than 1.75 to 20.0 wt.%, preferably in the range from 1.75 to 10.0 wt.% and particularly preferably in the range from 2.0 to 5.0 wt.% (in each case solids content), and
c) water, preferably in a quantity of at least 30.0 wt.% and particularly preferably at least 70.0 wt.% or at least 71.0 wt.% and
d) optionally the at least one in-can preservative, preferably in a quantity of at most 1.0 wt.%,
wherein the components forming the primer composition concentrate always add up to 100.0 wt.%.

## Revendications

1. Composition de primaire, contenant
a) au moins un liant organique, dispersé ou dispersible dans l'eau, dans laquelle le liant existe dans une quantité rapportée au poids total de la composition ne dépassant pas 7,0 % en poids (teneur en matières solides),
b) au moins un agent rendant hydrophobe, dans laquelle l'agent rendant hydrophobe existe dans une quantité rapportée au poids total de la composition ne dépassant pas 1,75 % en poids (teneur en matières solides ou actives), et
c) au moins 90,25 % en poids d'eau ainsi que,
d) le cas échéant, au moins un agent conservateur en pot,
dans laquelle les constituants formant la composition du primaire donnent toujours 100,0 % en poids.

2. Composition de primaire selon la revendication 1, **caractérisée par** au moins 91,25 % en poids d'eau et/ou
une quantité maximale de 1,0 % en poids dudit agent conservateur en pot au moins.

3. Composition de primaire selon la revendication 1 ou 2, comportant a) ledit liant organique dispersé dans l'eau au moins dans une quantité rapportée au poids total de la composition ne dépassant pas 7,0 % en poids (teneur en matières solides),
b) ledit agent rendant hydrophobe au moins dans une quantité rapportée au poids total de la composition ne dépassant pas 1,75 % en poids (teneur en matières solides ou actives), et
c) de l'eau dans une quantité d'au moins 90,25 % en poids ainsi que,
d) le cas échéant, ledit agent conservateur en pot au moins dans une quantité maximale de 1,0 % en poids,
dans laquelle les constituants formant la composition du primaire donnent toujours 100,0 % en poids.

4. Composition de primaire selon l'une quelconque des revendications précédentes, **caractérisée par**
0,25 à 7,0 % en poids, en particulier 0,5 à 6,0 en poids et en particulier de préférence 1,0 à 5,0 % en poids dudit liant organique au moins (teneur respective en matières solides) et/ou
0,1 à 1,75 % en poids, en particulier 0,2 à 1,5 % en poids et en particulier de préférence 0,25 à 1,25 % en poids dudit agent rendant hydrophobe au moins (teneur respective en matières solides ou actives)
et/ou
au moins 92,0 % en poids et en particulier dans la plage de 93,5 à 98,75 % en poids ou 93,5 à 98,5 % en poids d'eau et/ou
pas plus que 1,0 % en poids, en particulier pas plus que 0,5 % en poids et en particulier de préférence dans la plage de 0,01 à 0,25 % en poids dudit agent conservateur en pot au moins (teneur en matières solides ou actives),
dans laquelle les constituants formant la composition du primaire donnent toujours 100,0 % en poids.

5. Composition de primaire selon l'une quelconque des revendications précédentes, **caractérisée en ce que**
l'agent rendant hydrophobe est sélectionné parmi le groupe constitué de cires d'amide et de carnauba, de montana, de paraffine, de polyéthylène, notamment de polyéthylène HD, ainsi que de mélanges de ceux-ci et qu'il comprend notamment des cires de paraffine.

6. Composition de primaire selon l'une quelconque des revendications précédentes, **caractérisée en ce que**
le liant organique comprend des homopolymères et/ou des copolymères de polyuréthane et/ou de propionate de vinyle, d'acétate de vinyle, notamment d'éthylène-acétate de vinyle, d'acrylate, de styrène, notamment d'acrylate de styrène ou qu'il en est formé et qu'il existe notamment sous la forme de particules sphériques de matière plastique présentant un diamètre moyen inférieur à 2 µm.

7. Composition de primaire selon l'une quelconque des revendications précédentes, **caractérisée par**
une valeur de pH n'étant pas inférieure à 7,0, en particulier dans la plage de 7,0 à 9,0 et en particulier de préférence dans la plage de 7,5 à 8,5, ou ajustée sur une valeur de pH n'étant pas inférieure à 7,0, en particulier dans la plage de 7,0 à 9,0 et en particulier de préférence dans la plage de 7,5 à 8,5.

8. Composition de primaire selon l'une quelconque des revendications précédentes, comprenant en outre
du méthanol, de l'éthanol et/ou du propanol, par ex. de l'isopropanol et/ou du n-propanol, notamment de l'éthanol, en particulier dans une quantité à l'intérieur de la plage de 0,01 à 20 % en poids, en particulier de préférence à l'intérieur de la plage de 6 à 10 % en poids.

9. Composition de primaire selon l'une quelconque des revendications précédentes, comprenant en outre
des agents de préservation du film, des épaississants, du silicate de soude du sol de silice, des matières de remplissage, des pigments minéraux, des pigments organiques, des colorants et/ou des agents antimoussants.

10. Composition de primaire selon l'une quelconque des revendications précédentes, **caractérisée en ce que**
celle-ci est sensiblement dépourvue de matières de remplissage, de silicate de soude, de sol de silice, de pigments minéraux, de pigments organiques, de colorants, d'épaississants et d'agents antimoussants.

11. Utilisation de la composition de primaire selon l'une quelconque des revendications précédentes pour fabriquer un régulateur de fond sur un support de substrat, en particulier sélectionné parmi le groupe constitué de revêtements d'enduit, notamment d'enduits de chaux-ciment, de briques non cuites, de substrats en béton cellulaire, de plaques de plâtre, de plaques de carton-plâtre, de substrats en béton, de couches de peinture, notamment de couches de peinture à dispersion, de substrats en grès calcaire et de bois, en particulier de préférence sur un support de substrat minéral ou sur une couche de peinture, en particulier sélectionné parmi le groupe constitué de revêtements de peinture de dispersion aux silicates, de peinture à dispersion et de peinture aux silicates, en particulier de préférence de revêtements de peinture à dispersion.

12. Utilisation de la composition de primaire selon l'une des revendications 1 à 10 pour homogénéiser des supports s'imprégnant inégalement, notamment minéraux ou de couche de peinture, dans l'espace extérieur et/ou intérieur et/ou pour homogénéiser la capillarité de supports, notamment minéraux ou de couche de peinture, dans l'espace extérieur et/ou intérieur présentant des propriétés de conductivité capillaire variables et/ou pour consolider et/ou faire mieux adhérer sur des supports, notamment minéraux ou de couche de peinture, dans l'espace extérieur et/ou intérieur et/ou pour garantir une impression de couleur uniforme de couches de peinture sur des supports, notamment minéraux ou de couche de peinture, dans l'espace extérieur et/ou intérieur, dans laquelle les supports minéraux sont sélectionnés notamment parmi le groupe constitué de revêtements d'enduit, de plaques de plâtre, de plaques de carton-plâtre, de briques non cuites, de substrats en béton cellulaire, de substrats en béton et de substrats en grès calcaire, et dans laquelle les supports de couche de peinture sont sélectionnés parmi des revêtements de peinture de dispersion aux silicates, de peinture à dispersion et de peinture aux silicates, en particulier des revêtements de peinture à dispersion.

13. Revêtement de primaire sur une surface enduisable d'un substrat, notamment d'un substrat minéral, obtenu ou disponible avec la composition de peinture primaire selon l'une des revendications 1 à 10, notamment par l'application de 50 à 200 g/m², en particulier de 60 à 180 g/m² et en particulier de préférence de 80 à 140 g/m² d'une composition de primaire sur la surface enduisable.

14. Substrat enduit, notamment substrat minéral enduit, comportant une surface enduisable sur un support de substrat, notamment sélectionné parmi le groupe constitué de revêtements d'enduit, notamment d'enduits de chaux-ciment, de briques non cuites, de substrats en béton cellulaire, de plaques de plâtre, de plaques de carton-plâtre, de substrats en béton, de couches de peinture, notamment de couches de peinture à dispersion, de substrats en grès calcaire et de bois, et appliqué dessus au moins un revêtement de peinture primaire, notamment précisément un revêtement de peinture primaire selon la revendication 13.

15. Substrat enduit selon la revendication 14, comprenant en outre appliqué sur le revêtement de primaire, au moins un revêtement de peinture, notamment sélectionné parmi le groupe constitué de revêtements de peinture de dispersion aux silicates, de peinture à dispersion et de peinture aux silicates.

16. Procédé de fabrication d'un substrat enduit selon la revendication 14 ou 15, comprenant les étapes suivantes :
i) la mise à disposition d'un substrat avec une surface enduisable,
ii) l'application de la composition de primaire selon l'une des revendications 1 à 10 sur la surface enduisable du substrat,
iii) le séchage de la composition de primaire moyennant la formation d'un revêtement de primaire selon la revendication 13 et,
iv) le cas échéant, l'application d'un revêtement de peinture et/ou d'un revêtement d'enduit sur le revêtement de primaire.

17. Procédé selon la revendication 16, **caractérisé en ce que** le substrat comprend ou constitue une surface en bois enduisable et que la composition de peinture primaire contient du méthanol, de l'éthanol et/ou du propanol, par ex. de l'isopropanol et/ou du n-propanol, notamment de l'éthanol, en particulier dans une quantité à l'intérieur de la plage de 0,01 à 20 % en poids, en particulier de préférence à l'intérieur de la plage de 6 à 10 % en poids, et/ou au moins un agent de protection contre les UV, en particulier dans une quantité à l'intérieur de la plage de 0,01 à 5 % en poids, en particulier de préférence à l'intérieur de la plage de 0,1 à 1,25 % en poids, (rapportée respectivement à la teneur en matières solides ou actives).

18. Concentré d'une composition de primaire selon l'une des revendications 1 à 10, formé ou composé à partir
a) d'au moins un liant organique dispersé ou dispersible dans l'eau, dans lequel le liant existe dans une quantité rapportée au poids total de la composition à l'intérieur de la plage dépassant 7,0 % à 50 % en poids, en particulier dans la plage de 10 à 40 % en poids et en particulier de préférence dans la plage de 12 à 24 % en poids, (teneur respective en matières solides), et
b) d'au moins un agent rendant hydrophobe, dans lequel l'agent rendant hydrophobe existe dans une quantité rapportée au poids total de la composition à l'intérieur de la plage dépassant 1,75 à 20 % en poids, en particulier dans la plage dépassant 1,75 à 10
% en poids et en particulier de préférence dans la plage de 2,0 à 5,0 % en poids, (teneur respective en matières solides), et
c) d'eau, en particulier au moins 30,0 % en poids et en particulier de préférence au moins 70,0 % en poids ou au moins 71,0 % en poids d'eau et,
d) le cas échéant, d'au moins un agent conservateur en pot, en particulier dans une quantité maximale de 1,0 % en poids,
dans lequel les constituants formant le concentré de la composition du primaire donnent toujours 100,0 % en poids.

19. Concentré d'une composition de primaire selon la revendication 18, constitué
a) dudit liant organique au moins dispersé dans l'eau, notamment dans une quantité rapportée au poids total de la composition à l'intérieur de la plage dépassant 7,0 % à 50 % en poids, en particulier dans la plage de 10 à 40 % en poids et en particulier de préférence dans la plage de 12 à 24 % en poids, (teneur respective en matières solides), et
b) dudit agent rendant hydrophobe au moins, dans une quantité rapportée au poids total de la composition à l'intérieur de la plage dépassant 1,75 à 20 % en poids, en particulier dans la plage dépassant 1,75 à 10 % en poids et en particulier de préférence dans la plage de 2,0 à 5,0 % en poids, (teneur respective en matières solides), et
c) d'eau, en particulier dans une quantité d'au moins 30,0 % en poids et en particulier de préférence d'au moins 70,0 % en poids ou d'au moins 71,0 % en poids d'eau et,
d) le cas échéant, dudit agent de conservateur en pot au moins, en particulier dans une quantité maximale de 1,0 % en poids,
dans lequel les constituants formant le concentré de la composition du primaire donnent toujours 100,0 % en poids.
